# EUROPEAN PATENT APPLICATION

(11) **EP 4 746 125 A1**
(43) Date of publication of application: **20.05.2026**
(21) Application number: 25192649.9
(22) Date of filing: 29.07.2025
(51) Int. Cl.: H01M 10/613, H01M 10/617, H01M 10/652, H01M 10/6551, H01M 10/6556, H01M 10/6565, H01M 10/6566

(54) **SECONDARY BATTERY MODULE AND SECONDARY BATTERY COOLING APPARATUS**

(30) Priority: 13.11.2024 KR 20240161353
(71) Applicant: SAMSUNG SDI CO., LTD., Yongin-si, Gyeonggi-do 17084 (KR)
(72) Inventor: KIM, Hyungho, 17084 Yongin-si (KR)
(74) Representative: Marks & Clerk LLP

(57) **Abstract**

A secondary battery module includes a secondary battery group formed of a plurality of batteries, and a cold air transfer part in contact with the secondary battery group and configured to pass the cooling fluid supplied from outside the battery module and transfer to the secondary battery group the cold air of the cooling fluid, wherein a cooling fluid passage through which the cooling fluid passes is formed in the cold air transfer part and having an inlet and an outlet, and a fluid flow cross-sectional area of the cooling fluid passage increases from the inlet to the outlet.

## Description

### FIELD

The present disclosure relates to a secondary battery, and more specifically, to a secondary battery module and a secondary battery cooling apparatus.

### BACKGROUND

Unlike primary batteries that cannot be charged, secondary batteries are batteries that can be charged and discharged. Generally, a secondary battery includes an electrode assembly including a positive electrode plate, a negative electrode plate, and a separator, and an exterior material (battery can or case) for accommodating the electrode assembly. The electrode assembly may be classified into a wound type electrode assembly and a stacked type electrode assembly according to the stacking form of the electrode plates and the separator. The wound type is referred to as a jelly-roll type electrode assembly and the stacked type is referred to as a stack type electrode assembly. In addition, secondary batteries may be classified into pouch-type, cylindrical, and prismatic type secondary batteries according to the material and shape of the exterior material.

Meanwhile, a secondary battery module formed by connecting a plurality of secondary batteries generates heat therein during the charging and discharging processes, and when the generated heat is not quickly released, battery performance may be degraded, and in severe cases, thermal runaway may occur. For this reason, the secondary battery module includes a cooling plate. The cooling plate has a structure that transfers cold air to the secondary battery while being in close contact with the secondary battery. However, the conventional cooling plate has a disadvantage of poor cooling efficiency because it cannot uniformly transfer cold air to the secondary battery.

The herein information disclosed in this Background section is for enhancement of understanding of the background of the present disclosure, and therefore, it may contain information that does not constitute a related (or prior) art.

### SUMMARY

The present disclosure is directed to providing a secondary battery module and a secondary battery cooling apparatus that can improve overall cooling efficiency by providing to a plurality of secondary batteries approximately the same amount of cold air without bias.

According to an aspect of the present disclosure, there is provided a secondary battery module including a secondary battery group formed of a plurality of secondary batteries, and a cold air transfer part in contact with the secondary battery group and configured to pass the cooling fluid supplied from outside the battery module and transfer to the secondary battery group cold air of the cooling fluid, wherein a cooling fluid passage through which the cooling fluid passes is formed in the cold air transfer part and has an inlet and an outlet, and a fluid flow cross-sectional area of the cooling fluid passage increases from the inlet to the outlet.

According to an aspect of the present disclosure, there is provided a secondary battery cooling apparatus including a cold air transfer part installed in contact with a secondary battery group formed of a plurality of secondary batteries, and a cooling fluid circulation part configured to pass a cooling fluid through the cold air transfer part, wherein a cooling fluid passage through which the cooling fluid passes is formed in the cold air transfer part and has an inlet and an outlet and a fluid flow cross-sectional area of the cooling fluid passage increases from the inlet to the outlet.

At least some of the above and other features of the invention are set out in the claims.

Aspects and features of the present disclosure are not limited to those described herein, and other aspects and features not specifically mentioned herein will be clearly understood by those skilled in the art from the description of the present disclosure herein.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a perspective view illustrating a basic structure of a secondary battery to be cooled by a secondary battery cooling apparatus according to embodiments of the present disclosure;
FIG. 2 is a diagram schematically illustrating an overall configuration of the secondary battery cooling apparatus according to embodiments of the present disclosure;
FIG. 3 is a plan cross-sectional view illustrating a cooling plate in the secondary battery cooling apparatus according to embodiments of the present disclosure;
FIG. 4 is a cross-sectional view along line A-A of FIG. 3;
FIG. 5 is a plan cross-sectional view illustrating a modified example of the cooling plate shown in FIG. 3;
FIG. 6 is a cross-sectional view along line B-B of FIG. 5;
FIG. 7 is a plan view illustrating another example of the cooling plate in the secondary battery cooling apparatus according to embodiments of the present disclosure;
FIG. 8 is a cross-sectional view along line C-C of FIG. 7;
FIG. 9 is a diagram for describing the role of a cooling water deceleration groove in the cooling plate shown in FIG. 8;
FIG. 10 is a plan cross-sectional view illustrating still another example of the cooling plate in the secondary battery cooling apparatus according to embodiments of the present disclosure;
FIG. 11 is a cut-away exploded perspective view illustrating yet another example of the cooling plate in the secondary battery cooling apparatus according to embodiments of the present disclosure;
FIG. 12 is a plan cross-sectional view illustrating the cooling plate shown in FIG. 11;
FIG. 13 is a diagram illustrating the cooling plate of FIG. 11 viewed from inlet and outlet directions;
FIG. 14 is an exploded perspective view illustrating yet another example of the cooling plate in the secondary battery cooling apparatus according to embodiments of the present disclosure;
FIG. 15 is a cross-sectional view illustrating first and second main bodies of FIG. 14;
FIG. 16 is a diagram illustrating a state in which the first and second main bodies of FIG. 14 are welded together;
FIG. 17 is a perspective view illustrating a secondary battery pack to which the secondary battery module according to embodiments of the present disclosure is applied; and
FIG. 18 is a diagram illustrating a vehicle to which the secondary battery pack of FIG. 17 is applied.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements.

References to two compared elements, features, etc. as being "the same" may mean that they are "substantially the same." Thus, the phrase "substantially the same" may include a case having a deviation that is considered low in the art, for example, a deviation of 5% or less. In addition, uniformity of a parameter in a predetermined region may imply uniformity from an average perspective.

Although the terms first, second, and the like are used to describe various components, these components are substantially not limited by these terms. These terms are only used for distinguishing one component from another component, and unless otherwise stated, it is of course that a first component may also be a second component.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components.

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated and if "C to D" is stated, it means C or more and D or less, unless otherwise stated.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to limit the present disclosure.

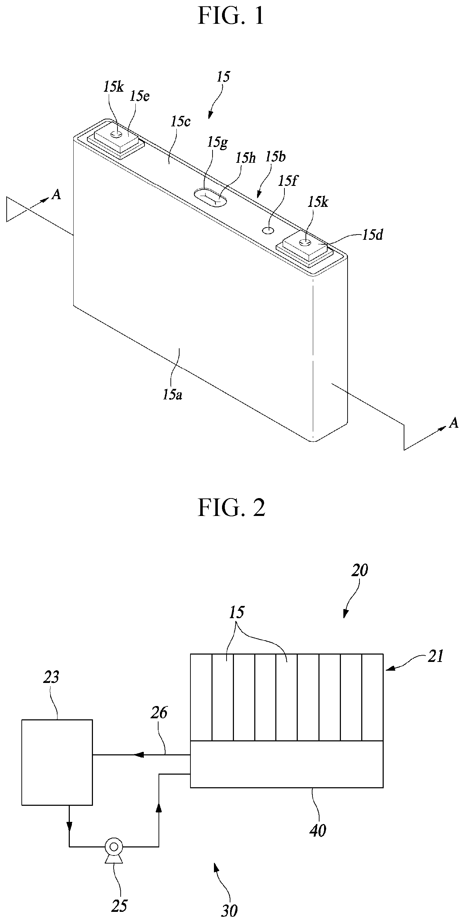

FIG. 1 is a perspective view illustrating a basic structure of a secondary battery 15 to be cooled by a secondary battery cooling apparatus 30 according to embodiments of the present disclosure. The secondary battery 15 shown in FIG. 1 is a prismatic-type secondary battery.

A case 15a defines an overall appearance of the prismatic secondary battery 15, and may be made of a conductive metal, such as aluminum, aluminum alloy, or nickel-plated steel. In addition, the case 15a may provide a space for accommodating an electrode assembly therein.

A cap assembly 15b may include a cap plate 15c that covers the opening of the case 15a. In some examples, the case 15a and the cap plate 15c may be made of a conductive material. Here, a first terminal 15d and a second terminal 15e may be electrically connected to respective positive and negative (or negative and positive) electrodes inside the case, and may be installed to protrude outward through the cap plate 15c.

The cap plate 15c may be equipped with an electrolyte injection port 15f formed to install a sealing plug (or seal pin), and a vent 15h junctioned to a gas discharge hole 15g. The vent 15h is for discharging gas generated inside the secondary battery 15.

Hereinafter, suitable materials that may be usable for the secondary battery 15 according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{d}X_{c}O_{2-α}D_{α} (0.90≤a≤1.8, 0≤b≤0.5, 0≤c≤0.5, 0<α<2); LiₐNi_{b}Co_{c}L¹dGₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the herein formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0<x≤2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on one another.

A plurality of the secondary batteries 15 having the herein configuration are combined to form one secondary battery group 21 of FIG. 2. The secondary battery group 21 may form one secondary battery module 20 together with a cooling plate 40. In addition, the secondary battery group 21 may be a cooling target to be cooled by the cooling plate 40.

FIG. 2 is a diagram schematically illustrating an overall configuration of a secondary battery cooling apparatus 30 according to embodiments of the present disclosure.

The secondary battery cooling apparatus 30 may include a cold air transfer part and a cooling fluid circulation part. The cold air transfer part serves to transfer cold air to the secondary battery group 21 while installed in close contact with the secondary battery group 21. In the present embodiment, a cooling plate 40 is applied as the cold air transfer part. The cooling plate 40 will be described herein.

The cooling fluid circulation part may move a cooling fluid to the cold air transfer part. The cooling fluid circulation part may include a cooler 23 and a circulation pump 25. The cooler 23 may be connected to the cold air transfer part through a circulation pipe 26. The cooler 23 serves to cool the cooling fluid that has completed heat exchange while passing through the cold air transfer part. In addition, the circulation pump 25 may continuously circulate the cooling fluid. In particular, a flow rate per hour of the cooling fluid circulated by the circulation pump 25 at any point is the same. The cooling fluid may include cooling water.

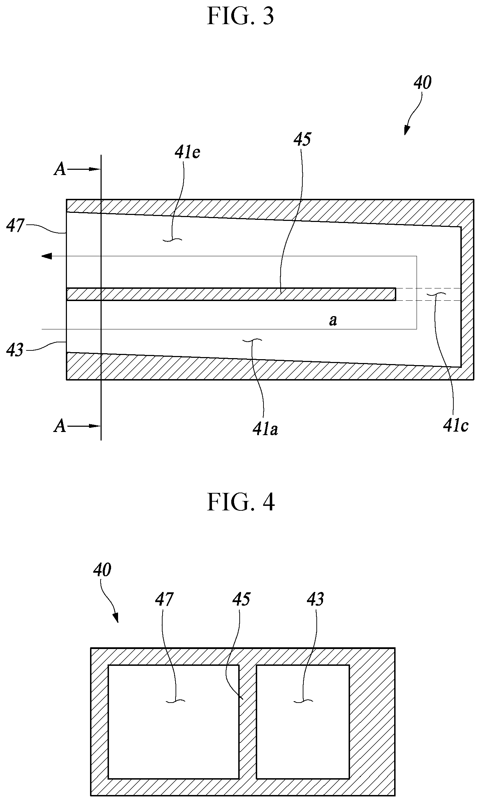

FIG. 3 is a plan cross-sectional view of the cooling plate 40 which is the cold air transfer part in the secondary battery cooling apparatus 30 according to embodiments of the present disclosure, and FIG. 4 is a cross-sectional view along line A-A of FIG. 3.

The cooling plate 40 may be in close contact with a bottom surface of the secondary battery group 21, pass the cooling fluid supplied through the circulation pipe 26, and transmit cold air of the cooling fluid to the secondary battery group 21.

The cooling plate 40 includes an inlet 43 and an outlet 47 and provides a cooling fluid passage for passing the cooling fluid. In particular, a fluid flow cross-sectional area of the cooling fluid passage increases from the inlet 43 to the outlet 47. That is, the fluid flow cross-sectional area increases in the direction of arrow a of FIG. 3.

The cooling plate 40 has an external appearance of a plate shape with a certain thickness and may be located below the secondary battery group 21. The cooling plate 40 is in close contact with the bottom surface of secondary battery group 21 to enable heat conduction.

In particular, the heat transfer area of each secondary battery 15 constituting the secondary battery group 21 with respect to the cooling plate 40 is the same. In other words, the contact area of each secondary battery 15 with respect to an upper surface of the cooling plate 40 is the same.

The reason for configuring the contact area to be the same is that, when the cold air emitted to an upper portion of the cooling plate 40 is not concentrated locally but is uniform over the entire surface, the same cold air may be delivered to each secondary battery 15.

As shown in FIG. 3, the cooling fluid passage may include a first passage 41a and a second passage 41e partitioned by a partition wall 45. The first passage 41a and the second passage 41e may be connected through a connection passage 41c. The first passage 41a opens toward the inlet 43, and the second passage 41e opens toward the outlet 47.

Therefore, the cooling fluid introduced into the inlet 43 through the circulation pipe 26 may exchange heat with the cooling plate 40 while flowing through the first passage 41a, the connection passage 41c, and the second passage 41e. The cooling plate 40, which is heated by receiving heat from the secondary battery group 21, exchanges heat with the cooling fluid.

In addition, the first passage 41a and the second passage 41e may be disposed horizontally with each other. That is, the first passage 41a and the second passage 41e may have the same height. Since the first passage 41a and the second passage 41e have the same height, the first and second passages 41a and 41e have the same spacing from the secondary battery group. That is, the spacing between the first passage 41a and the secondary battery group 21 and the spacing between the second passage 41e and the secondary battery group 21 may be implemented to be the same.

As described herein, the cooling plate 40 may perform heat dissipation of the secondary battery group 21 while being in close contact with the bottom surface of the secondary battery group 21. The cooling fluid absorbs heat from the secondary battery group 21 and is discharged through the outlet 47. The cooling fluid passage has a structure in which the cross-sectional area increases from the inlet 43 to the outlet 47 so that cold air is uniformly provided to the secondary battery group 21. That is, the same amount of cold air is transferred to each secondary battery 15 so that a cooling imbalance can be prevented.

Meanwhile, referring to FIG. 4, it can be seen that an area of the outlet 47 is relatively wider than an area of the inlet 43. As described herein, the fluid flow cross-sectional area of the cooling fluid passage inside the cooling plate 40 increases from the inlet 43 to the outlet 47 so that a flow cross-sectional area of the outlet 47 is relatively wider.

Since there is a difference in flow cross-sectional area, a flow rate of the cooling fluid flowing into the inlet 43 is relatively slower than the flow rate of the cooling fluid flowing out of the outlet 47. A slow flow rate may mean that a heat exchange time with a heat source is relatively long.

Since a cooling fluid newly introduced through the inlet 43 has not yet started heat exchange, a temperature of the cooling fluid is low (relative to the cooling fluid discharged through the outlet 47), and the time required for heat exchange may be shorter than that on the outlet 47 side. A temperature difference between the cooling fluid at the inlet 43 and the secondary battery group is assumed to be ΔT1.

Since the cooling fluid flows in the direction of arrow a and its temperature gradually increases, a temperature difference ΔT2 between a temperature of the cooling fluid at the outlet 47 side and the secondary battery group 21 becomes smaller than the temperature difference ΔT1. In a situation in which the temperature difference becomes small, the heat exchange time should be longer to perform heat exchange of the same amount of heat. In addition, in order to extend the heat exchange time relatively longer as it approaches the outlet 47, the flow cross-sectional area of the cooling fluid is implemented to increase from the inlet 43 to the outlet 47. When the flow rate per hour is the same, the wider the flow cross-sectional area, the longer it takes to pass through the flow cross-sectional area.

In another example, the flow cross-sectional area of the first passage 41a may be kept constant, and only the flow cross-sectional area of the second passage 41e may be designed to increase as it goes downstream. In addition, conversely, the flow cross-sectional area of the second passage 41e may be kept constant, and only the flow cross-sectional area of the first passage 41a may be designed to increase as it goes downstream.

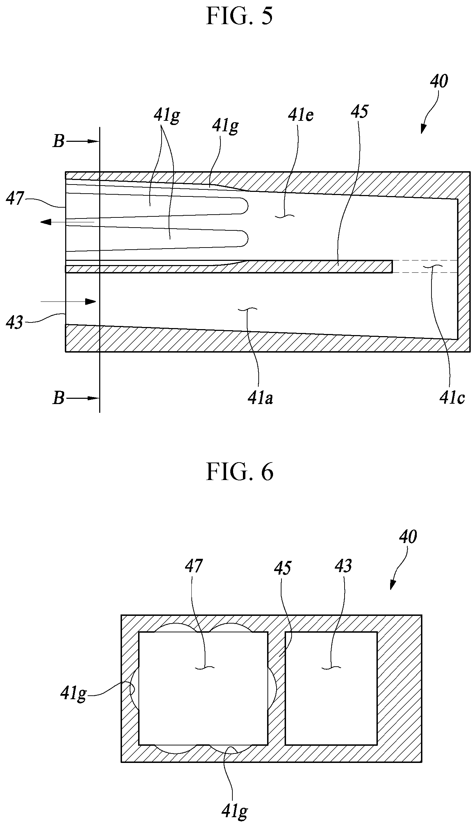

FIG. 5 is a plan cross-sectional view illustrating a modified example of the cooling plate 40 shown in FIG. 3, and FIG. 6 is a cross-sectional view along line B-B of FIG. 5.

As shown in the drawings, a plurality of expansion grooves 41g may be formed in the second passage 41e. The expansion groove 41g is a groove with a round bottom surface, and a width and depth of the expansion groove 41g may gradually become wider and deeper toward the outlet 47. By applying the expansion groove 41g, the cooling fluid passing through the second passage 41e and approaching the outlet 47 may be decelerated more quickly.

The expansion groove 41g having the herein shape may more effectively implement a mechanism in which the cooling fluid is decelerated as it approaches the outlet 47. The cooling fluid flows in at a relatively high speed through the inlet 43, but due to the increasing shape of the expansion groove 41g, a flow velocity may decrease more rapidly as it passes through the second passage 41e. These flow characteristics may occur because the flow cross-sectional area of the cooling fluid increases, causing the cooling fluid to occupy more space, which reduces the flow velocity.

In addition, as the flow rate of the cooling fluid toward the outlet 47 slows down, the time for the cooling fluid to exchange heat with the secondary battery group 21 becomes longer, enabling more efficient and uniform cooling. The heat exchange that was relatively fast at the inlet 43 becomes longer as the cooling fluid approaches the outlet 47 due to the decrease in the speed of the cooling fluid, which may improve cooling efficiency.

The structural characteristics of FIG. 5 play an important role in helping to achieve efficient heat exchange by changing the flow cross-sectional area and controlling the speed of the cooling fluid. The shape, size, or installation position of the expansion groove 41g may be implemented in various ways through other examples.

Furthermore, even for the cooling plate 40 having the shapes shown in FIGS. 5 and 6, various modifications of the first passage 41a and the second passage 41e are possible. For example, while the flow cross-sectional area of the first passage 41a is kept constant, only the flow cross-sectional area of the second passage 41e may be designed to increase toward the outlet 47. Conversely, the flow cross-sectional area of the second passage 41e may be kept constant, and the flow cross-sectional area of the first passage 41a may be increased to enhance a cooling effect downstream.

These modified examples allow for further optimization of the performance of the cooling plate 40 by allowing various adjustments of the flow rate of the cooling fluid and the heat exchange time.

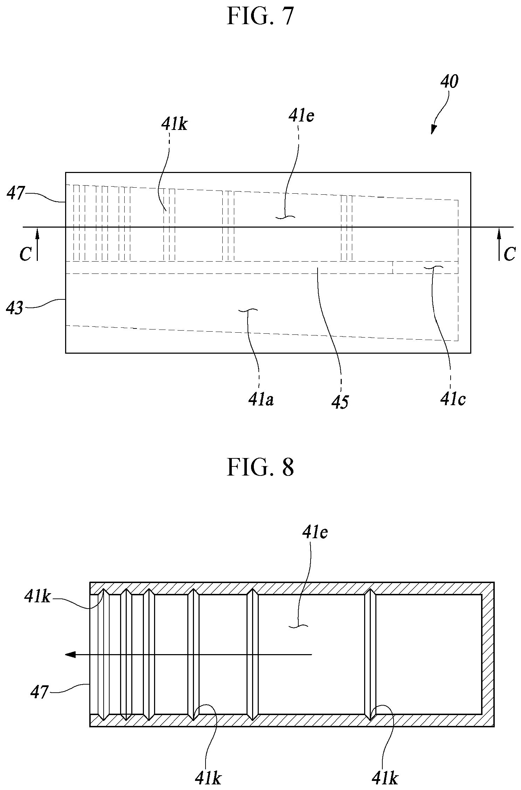

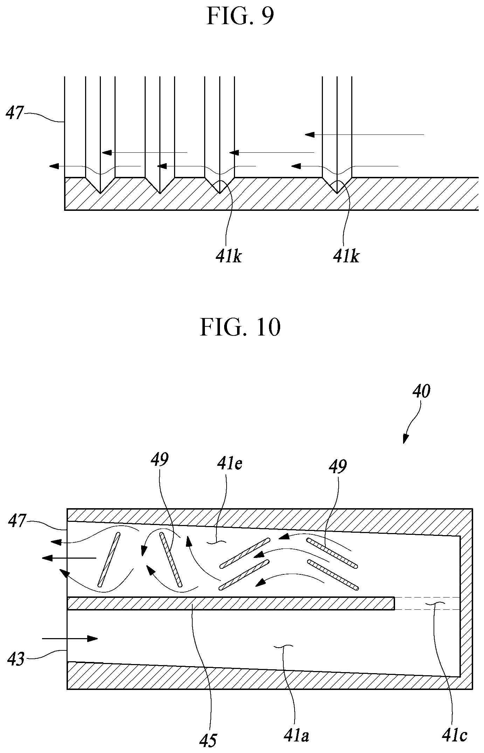

FIG. 7 is a plan view for describing the cooling plate 40 in the secondary battery cooling apparatus according to some embodiments of the present disclosure, FIG. 8 is a cross-sectional view along line C-C of FIG. 7, and FIG. 9 is a diagram for describing the role of a cooling water deceleration groove 41k in the cooling plate 40 shown in FIG. 8.

As shown in the drawings, a flow rate detection part may be formed on an inner surface of the second passage 41e. The flow rate detection part may serve to further reduce the flow rate of the cooling fluid passing through the second passage 41e toward the outlet 47.

Deceleration grooves 41k may be applied as the flow rate detection part. The deceleration groove 41k may have a shape of, for example, a V-cut notch groove. The deceleration groove 41k may disrupt the flow of the cooling fluid passing through the second passage 41e and slow down a passage speed of the cooling fluid. Since some of the fluid passing through the second passage 41e should enter and exit the deceleration groove 41k, an average streamline length of the cooling fluid may become longer and thus the passage speed may be reduced.

The herein description will be described in more detail as follows. When the cooling fluid flows through the second passage 41e and passes to the outlet 47, the flow rate detection part is responsible for additionally reducing the flow rate of the cooling fluid. This structural feature may solve the problem of the cooling fluid flowing quickly and not having a sufficient heat exchange time.

In addition, the deceleration groove 41k applied as the flow rate detection part may have the shape of a V-cut notch groove and plays a role in effectively disrupting the flow of the fluid passing through the second passage 41e. That is, the deceleration groove 41k may change the fluid flow so as to prevent the cooling fluid from passing through the passage in a straight line and complicate the flow of the cooling fluid to reduce the passage speed.

The operating principle of the deceleration groove 41k is as follows. A portion of the cooling fluid passing through the second passage 41e enters the deceleration groove 41k, the flow velocity is disrupted, and the flow streamline becomes longer. As the length of the streamline increases, the time for the fluid to pass through the entire passage increases, which ultimately has the effect of lowering an average velocity of the cooling fluid. The fluid caught in the deceleration groove decreases in velocity as it exits the deceleration groove, which allows the cooling fluid to remain inside the second passage for a longer period of time for heat exchange.

Further, in addition to the function of simply lowering the flow velocity, the deceleration groove 41k causes turbulence in the flow of the cooling fluid, allowing more effective heat transfer between the cooling fluid and an inner wall of the cooling plate. The turbulent flow may maximize heat transfer efficiency by increasing the contact between the fluid and the wall.

This design provides great advantages, especially in more efficient thermal management of secondary batteries. Since the secondary battery generates heat during operation, it is essential to adjust the flow rate of the cooling fluid to secure a sufficient heat exchange time. The structure such as the deceleration groove 41k may play an important role in preventing the cooling fluid from flowing too quickly, thereby increasing the heat exchange time with the secondary battery group 21 and improving overall cooling performance.

FIG. 10 is a plan view illustrating the cooling plate 40 in the secondary battery cooling apparatus according to some embodiments of the present disclosure.

As shown in the drawing, a plurality of stream guides 49 may be provided inside the second passage 41e. The stream guide 49 is a plate-shaped member with a certain thickness, and a lower end portion of the stream guide 49 may be fixed to a bottom of the second passage 41e and an upper end portion thereof fixed to a top thereof. The stream guide 49 may guide the linear flow of the cooling fluid into a curved flow thereof.

The cooling fluid is guided by the stream guide 49, for example, repeatedly meanders in a left-right direction. The time for the cooling fluid to pass through the second passage 41e becomes longer as the streamline of the cooling fluid becomes longer, which increases the available time for heat exchange.

As described herein, the stream guide 49 is made of a plate-shaped member with a certain thickness and may be vertically fixed from the bottom to the top of the second passage 41e. As described herein, the plurality of stream guides 49 fixed to the second passage are intended to prevent the cooling fluid from simply flowing in a straight line and to control the flow of the cooling fluid, thereby increasing overall cooling efficiency. The stream guide 49 serves to induce the cooling fluid to meander, causing the cooling fluid to pass through the second passage 41e while meandering in a left-right direction.

The main advantage achieved by causing the flow of the cooling fluid to meander is to increase the length of the streamline. In general, when the fluid passes quickly in a straight path, the heat exchange time is short and thus the cooling effect is limited. However, when a curved flow is induced by the stream guides 49, the streamline of the cooling fluid becomes longer and the time to pass through the second passage 41e naturally increases. Therefore, the exchange time between the cooling fluid and the cooling plate 40 becomes longer, resulting in more effective heat dissipation.

In addition, the stream guide 49 may serve to generate turbulence in addition to simply impeding the flow of the cooling fluid. When the cooling fluid meanders along the stream guides 49 and the flow is disrupted to become more complicated, the cooling fluid comes into contact with the walls of the cooling plate more. This promotes heat transfer between the wall surface and the fluid to further enhance the cooling performance. Since a turbulent flow generally has a higher heat transfer coefficient than a laminar flow, the stream guides 49 may play an important role in maximizing cooling performance.

The spacing and shape of the stream guides 49 may be adjusted in various ways. For example, when the stream guides 49 are disposed to be shorter and closer together, the fluid should change a direction more frequently so that the flow rate may significantly slow down. Conversely, by increasing the spacing of the stream guides or adjusting their heights, it is possible to generate appropriate turbulence while maintaining the flow velocity to some extent. The flexibility of this design may be optimized depending on cooling requirements.

Thus, the stream guides 49 may maximize the heat exchange time between the cooling fluid and the cooling plate by guiding the flow of the cooling fluid to meander and extending the length of the streamline, ultimately enabling stable heat management of the secondary battery.

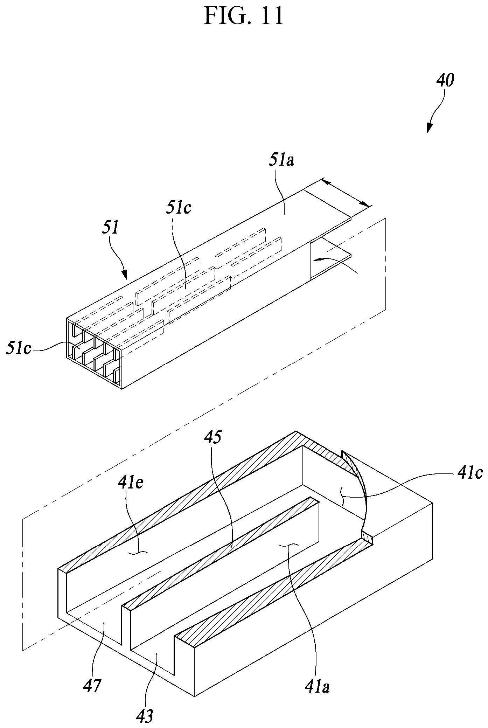

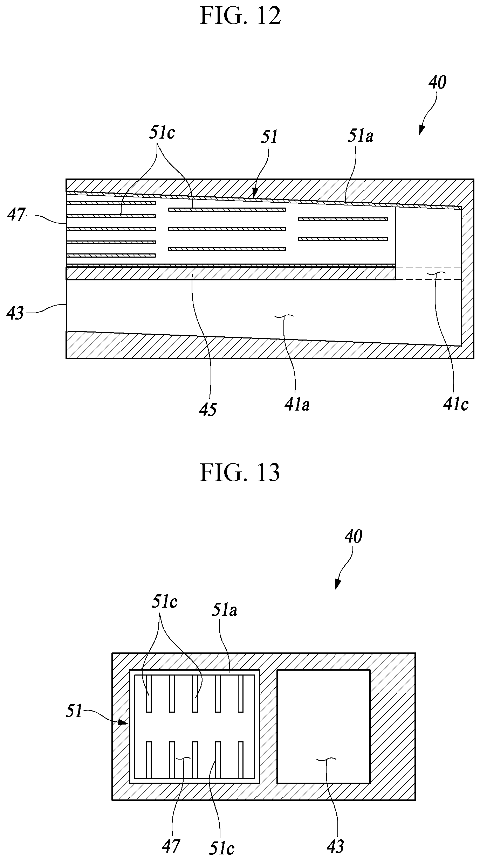

FIG. 11 is a cut-away exploded perspective view illustrating the cooling plate 40 in the secondary battery cooling apparatus according to some embodiments of the present disclosure, and FIG. 12 is a plan cross-sectional view illustrating the cooling plate shown in FIG. 11. In addition, FIG. 13 is a diagram illustrating the cooling plate of FIG. 11 viewed from inlet and outlet directions.

As shown in FIGS. 11 to 13, a heat exchange liner 51 may be added inside the second passage 41e of the cooling plate 40. The heat exchange liner 51 may be made of copper or aluminum as a heat transfer member to improve heat transfer performance.

The heat exchange liner 51 is fixed inside the second passage 41e and allows the cooling fluid to pass through the heat exchange liner 51. In addition, a contact area of the heat exchange liner 51 with the cooling fluid may be expanded toward the outlet 47.

The heat exchange liner 51 may include a guide tunnel 51a and a plurality of heat transfer fins 51c. The guide tunnel 51a has a shape of a quadrangular duct and may be coupled to be in close contact with the inner surface of second passage 41e. A coupling method of the heat exchange liner 51 to the guide tunnel 51a may be welding.

In addition, the heat transfer fins 51c may collect the cold air of the cooling fluid and transfer the cold air to the guide tunnel 51a while fixed to an inner side of the guide tunnel 51a. In addition, hot air transferred from the secondary battery group 21 may be transferred to the heat transfer fins 51c through the guide tunnel 51a. The cooling fluid may exchange heat through the heat transfer fins 51c.

The number of heat transfer fins 51c may increase toward the outlet. As shown in FIG. 12, the number of heat transfer fins 51c is applied as two rows at a beginning portion of the second passage 41e, three rows thereafter, and five rows at an end portion thereof.

As described herein, the number of heat transfer fins 51c increasing toward the end portion is for expanding the heat exchange area and provide uniform cooling. As described herein, since the temperature of the cooling fluid decreases toward the outlet 47, the heat exchange area should be expanded to secure uniform supply of the cold air. The number of heat transfer fins 51c may be applied differently through various embodiments.

As described herein, since the cooling plate 40 has the heat exchange liner 51 inside the second passage 41e, heat transfer performance can be greatly improved. As described herein, the heat exchange liner 51 is made of a high thermal conductivity material such as copper or aluminum, which further increases heat transfer efficiency and enables more uniform cooling of the secondary battery group 21. Furthermore, since the heat exchange liner 51 has a structure in which the contact area with the cooling fluid expands toward the outlet 47, heat exchange efficiency can be further improved.

In addition, the number of heat transfer fins 51c is designed to increase toward the outlet. By adjusting the number of heat transfer fins 51c, it is possible to respond to various cooling requirements and provide optimal cooling performance according to various usage environments or operating conditions.

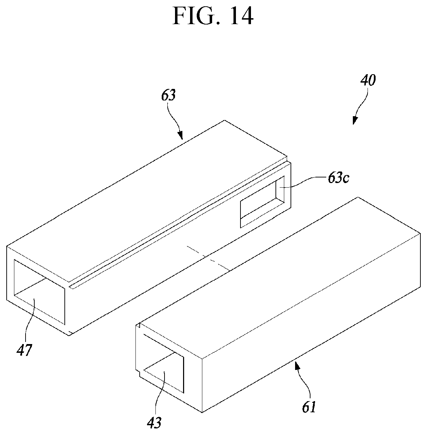

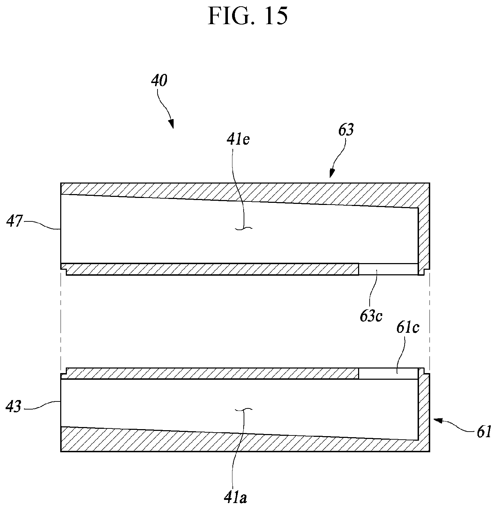

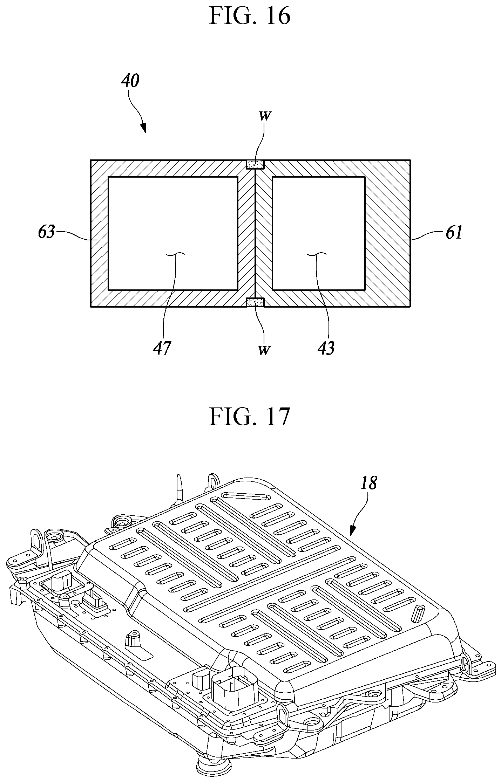

FIG. 14 is an exploded perspective view illustrating yet another example of the cooling plate 40 in the secondary battery cooling apparatus 30 according to one embodiment of the present disclosure, FIG. 15 is a cross-sectional view illustrating first and second main bodies 61 and 63 of FIG. 14, and FIG. 16 is a diagram illustrating a state in which the first and second main bodies of FIG. 14 are welded together.

As shown in FIG. 14, the cooling plate 40 as the cold air transfer part may be composed of a first main body 61 and a second main body 63. When the first main body 61 and the second main body 63 are combined, one cooling plate 40 may be formed.

As shown in the drawings, the cooling plate 40 may include the first main body 61 and the second main body 63.

The first main body 61 may have the inlet 43 at one end and a first connection passage 61c at the other end. In addition, the first passage 41a may be provided inside the first main body 61. The cooling fluid pumped by the circulation pump 25 may be introduced into the first passage 41a through the inlet 43 and then discharged through the first connection passage 61c. The flow cross-sectional area of the first passage 41a may also increase from the inlet 43 toward the first connection passage 61c.

The second main body 63 is a paired component with the first main body 61 and may be welded to a side portion of the first main body 61. The outlet 47 may be formed at one end of the second main body 63, and a second connection passage 63c may be formed at the other end thereof. The second connection passage 63c is a quadrangular hole corresponding to the first connection passage 61c. When the first main body 61 and the second main body 63 are combined, the first and second connection passages 61c and 63c may form one passage.

The second connection passage 63c may receive the cooling fluid flowing from the first main body 61 and guide the cooling fluid to the second main body 63. The cooling fluid guided to the second main body 63 may be discharged to the outlet 47 through the second passage 41e. The flow cross-sectional area of the second passage 41e may increase toward the outlet 47.

FIG. 16 is a diagram illustrating a state in which the first main body 61 and the second main body 63 are welded together. Reference numeral w indicates a welding portion. As shown in the drawing, the first main body 61 and the second main body 63 may be in close contact with each other to form one cooling plate 40.

Meanwhile, the first main body 61 and the second main body 63 may be made of different metals. In particular, a thermal conductivity of the second main body 63 may be relatively higher than that of the first main body 61. For example, the first main body 61 may be made of an aluminum alloy, and the second main body 63 may be made of a copper alloy.

In this way, since the thermal conductivity of the second main body 63 is higher than that of the first main body 61, the uniform cold air output of the cooling plate 40 may be implemented more stably. That is, although the temperature of the cooling fluid passing through the second passage 41e is relatively lower than the temperature of the cooling fluid passing through the first passage 41a, since the thermal conductivity of the second main body 63 is relatively high, an amount of heat exchange with the secondary battery group 21 may not be lower than an amount of heat exchange performed by the first main body 61.

As described herein, the cooling plate 40, which is formed by combining the first main body 61 and the second main body 63, performs a function of effectively removing the heat generated from the secondary battery 15. In addition, since the thermal conductivity of the second main body 63 is relatively higher than that of the first main body 61, it is possible to more stably implement a uniform cold air output and increase the efficiency of the entire system.

FIG. 17 is a perspective view illustrating a secondary battery pack 18 to which the secondary battery module 20 according to embodiments of the present disclosure is applied.

Referring to FIG. 3, the battery pack 18 may include an assembly to which individual batteries are electrically connected and a pack housing accommodating the same. In the drawings, for convenience of illustration, components including a bus bar, a cooling unit, external terminals for electrically connecting batteries, etc., are not shown. The battery pack 18 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto.

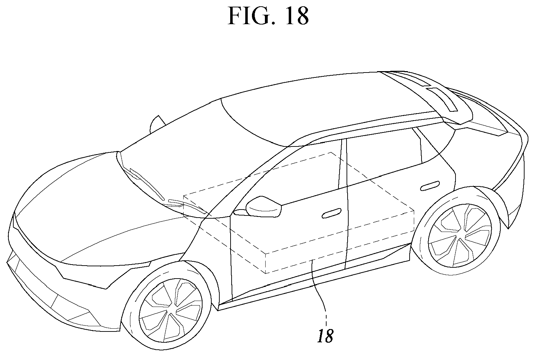

FIG. 18 is a diagram illustrating a vehicle to which the secondary battery pack of FIG. 17 is applied. FIG. 18 shows a vehicle that includes the battery pack 18 shown in FIG. 17 on the lower body thereof. The vehicle may operate by (e.g., may be powered by) receiving power from the battery pack 18.

According to a secondary battery cooling apparatus of the present disclosure, which is formed as described herein, since a distribution of cold air discharged from a cooling plate in close contact with the secondary battery is uniform over the entire surface of the cooling plate, the same amount of cool air can be provided without bias to a plurality of secondary batteries so that overall cooling efficiency can be improved.

Although the present disclosure has been described herein with respect to embodiments thereof, the present disclosure is not limited thereto. Various modifications and variations can be made thereto by those skilled in the art within the scope of the present disclosure as defined by the appended claims and their equivalents.

## Claims

1. A secondary battery cooling apparatus comprising:
a cold air transfer part configured to be installed in contact with a secondary battery group formed of a plurality of secondary batteries; and
a cooling fluid circulation part configured to pass a cooling fluid through the cold air transfer part,
wherein a cooling fluid passage through which the cooling fluid passes is formed in the cold air transfer part and has an inlet and an outlet, and a fluid flow cross-sectional area of the cooling fluid passage increases from the inlet to the outlet.

2. The secondary battery module as claimed in claim 1, wherein:
a heat transfer area of each of the plurality of secondary batteries constituting the secondary battery group with respect to the cold air transfer part is substantially the same; and
the cooling fluid passage comprises a first passage open to the inlet and a second passage open to the outlet, which passages are partitioned by a partition wall and connected to a connection passage.

3. The secondary battery module as claimed in claim 2, wherein:
the cold air transfer part has a plate shape and is installed below the secondary battery group; and
the first passage and the second passage are disposed substantially horizontally and have approximately the same spacing from the secondary battery group.

4. The secondary battery module as claimed in claim 2 or 3, wherein a flow cross-sectional area of the first passage increases from the inlet to the connection passage.

5. The secondary battery module as claimed in claim 3 or 4, wherein a flow cross-sectional area of the second passage increases from the connection passage to the outlet.

6. The secondary battery module as claimed in claim 3, 4 or 5, wherein a flow rate detection part is formed inside the second passage to additionally reduce a flow rate of the cooling fluid passing through the second passage.

7. The secondary battery module as claimed in any one of claims 3 to 6, wherein a heat exchange liner, which is in contact with the cooling fluid and whose contact area with the cooling fluid increases toward the outlet, is installed inside the second passage.

8. The secondary battery module as claimed in claim 7, wherein the heat exchange liner comprises:
a guide tunnel in contact with an inner surface of the second passage and configured to pass the cooling fluid; and
a plurality of heat transfer fins fixed to an inner side of the guide tunnel and collect and transfer to the guide tunnel cold air of the cooling fluid, wherein a number of heat transfer fins increases toward the outlet.

9. The secondary battery module as claimed in any preceding claim, wherein:
a heat transfer area of each of the plurality of secondary batteries constituting the secondary battery group with respect to the cold air transfer part is approximately the same; and
the cold air transfer part comprises:
a first main body comprising a first connection passage having the inlet at one end and through which the cooling fluid is discharged at the other end and providing a first passage, and
a second main body having the outlet at one end and a second connection passage corresponding to the first connection passage at the other end, providing a second passage therein, and constituting one cold air transfer part by being combined with the first main body.

10. The secondary battery module as claimed in claim 9, wherein a thermal conductivity of the second main body is relatively higher than that of the first main body.

11. A secondary battery module comprising:
a secondary battery group formed of a plurality of secondary batteries; and
the secondary battery cooling apparatus of any preceding claim.
